# EUROPEAN PATENT SPECIFICATION

(11) **EP 4 340 264 B1**
(45) Date of publication and mention of the grant of the patent: **29.07.2026**
(21) Application number: 22827399.1
(22) Date of filing: 10.06.2022
(51) Int. Cl.: H04L 1/00, H04L 5/00, H04W 24/04

(54) **SIGNAL PROCESSING METHOD AND NETWORK DEVICE**
SIGNALVERARBEITUNGSVERFAHREN UND NETZWERKVORRICHTUNG
PROCÉDÉ DE TRAITEMENT DE SIGNAL ET DISPOSITIF DE RÉSEAU

(30) Priority: 22.06.2021 CN 202110692955
(43) Date of publication of application: 20.03.2024
(73) Proprietor: Huawei Technologies Co., Ltd., Shenzhen, Guangdong 518129 (CN)
(72) Inventor: YOU, Yanzhen, Shenzhen, Guangdong 518129 (CN); DENG, Ailin, Shenzhen, Guangdong 518129 (CN); SUN, Qiang, Shenzhen, Guangdong 518129 (CN); PENG, Jindong, Shenzhen, Guangdong 518129 (CN)
(74) Representative: Maiwald GmbH
(86) International application number: PCT/CN2022/098073
(87) International publication number: WO 2022/267903

(56) References cited:
- CN-A- 102 158 272
- CN-A- 109 792 304
- US-A1- 2021 014 085
- US-A1- 2021 014 085

## Description

This application claims priority to Chinese Patent Application No. 202110692955.8, filed with the China National Intellectual Property Administration on June 22, 2021 and entitled "SIGNAL PROCESSING METHOD AND NETWORK DEVICE".

### TECHNICAL FIELD

This application relates to the field of wireless communication, and in particular, to a signal processing method and a network device.

### BACKGROUND

A beamforming technology is a signal processing technology in which an antenna array is used to send and receive signals in a directional manner. In the beamforming technology, amplitudes and phases of signals transmitted over a plurality of transmitting channels are required to be consistent. In actual application, a network device has phenomena such as a hardware process error and non-linear distortion of an amplifier. The foregoing phenomena may cause a difference between a receiving channel and a transmitting channel. In this way, a weight that is of the transmitting channel and that is obtained through calculation based on a channel sounding reference signal (sounding reference signal, SRS) that is measured on the receiving channel has an error. Therefore, channel calibration is required.

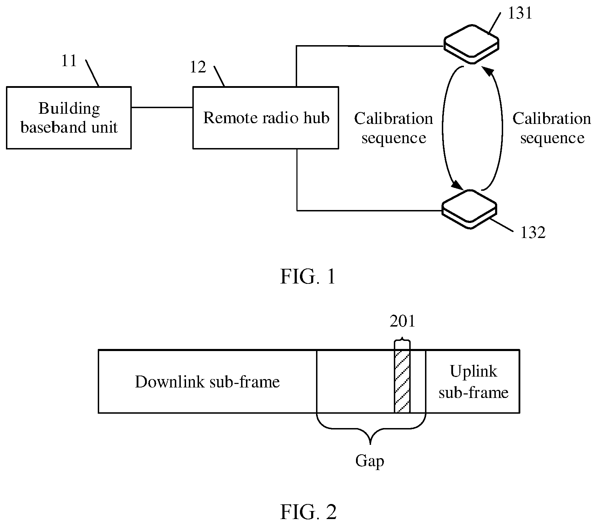

Refer to FIG. 1. A pico remote radio unit (pico remote radio unit, pRRU) 131 sends a calibration sequence to a pRRU 132 in a gap (GAP), and the pRRU 132 sends the calibration sequence to a building baseband unit (building baseband unit, BBU) 11 by using a remote radio unit hub (remote radio unit hub, rhub) 12. The pRRU 132 sends a calibration sequence to the pRRU 131 in the gap, and the pRRU 131 sends the calibration sequence to the building baseband unit 11 by using the remote radio unit hub 12. The building baseband unit 11 compares the calibration sequence received from the pRRU 131 with the calibration sequence received from the pRRU 132, and may determine a calibration coefficient based on a comparison result. The building baseband unit 11 adjusts an amplitude and a phase of a radio signal based on the calibration coefficient, so that signals sent or received by using the pRRU 131 and the pRRU 132 have a same amplitude and a same phase. In a frame shown in FIG. 2, a time-frequency resource 201 occupied by a calibration sequence belongs to the gap. It should be understood that the frame shown in FIG. 2 further includes a downlink sub-frame and an uplink sub-frame that are not shown.

In actual application, the gap may be insufficient for transmitting a calibration sequence. This affects a calibration result. US 2021/0014085 A1 describes a time-division duplex multipleinput multiple-output system that includes a plurality of nodes.

### SUMMARY

In view of this, this application provides a signal processing method and a network device, to effectively transmit a calibration sequence, so that impact of insufficient gap resources on a calibration result is overcome. The present invention is defined by the subject-matter of the independent claims. Additional features of the invention are presented in the dependent claims.

According to a first aspect, a signal processing method is provided. In the method, a first network device sends a first calibration sequence to a second network device on a first time-frequency resource in a data sub-frame, and when transmitted to the second network device, the first calibration sequence is converted into a first target calibration sequence. Then, the second network device sends the first target calibration sequence to the first network device through a network interface. After receiving a second target calibration sequence sent by the second network device on a second time-frequency resource in a data sub-frame, the first network device determines a first calibration coefficient based on the first calibration sequence, the first target calibration sequence, the pre-stored second calibration sequence, and the second target calibration sequence, and then calibrates a first radio signal based on the first calibration coefficient. The second target calibration sequence corresponds to the second calibration sequence sent by the second network device on the second time-frequency resource. A cell in which the first network device is located is adjacent to a cell in which the second network device is located. The data sub-frame is an uplink sub-frame or a downlink sub-frame, for example, a PDSCH or a PUSCH. In this implementation, because a quantity of time-frequency resources included in the data sub-frame is far greater than a quantity of time-frequency resources required by a calibration sequence, a problem that a gap is insufficient to transmit the calibration sequence can be resolved.

In a possible implementation, the signal processing method further includes: The first network device receives a first message sent by a third network device; when a location of a third time-frequency resource included in the first message overlaps a location of the first time-frequency resource, the first network device sends the first calibration sequence to the second network device on a fourth time-frequency resource in a data sub-frame, and then receives a third target calibration sequence sent by the second network device through the network interface; and after receiving the second target calibration sequence on the second time-frequency resource in the data sub-frame, the first network device determines a second calibration coefficient based on the first calibration sequence, the third target calibration sequence, the second calibration sequence, and the second target calibration sequence, and calibrates a second radio signal based on the second calibration coefficient. A cell in which the third network device is located is adjacent to the cell in which the first network device is located. The first message includes the first calibration sequence and the location of the third time-frequency resource, and the third time-frequency resource is used by the third network device to send the first calibration sequence. A location of the fourth time-frequency resource does not overlap the location of the third time-frequency resource. The third target calibration sequence is a calibration sequence received by the second network device on the fourth time-frequency resource. In this implementation, because the location of the fourth time-frequency resource does not overlap the location of the third time-frequency resource, the first network device and the third network device may transmit the first calibration sequence on different time-frequency resources, to avoid mutual interference.

In another possible implementation, the signal processing method further includes: The first network device receives a second message sent by a fourth network device; when a location of a fifth time-frequency resource included in the second message overlaps the location of the first time-frequency resource, the first network device sends a third calibration sequence to the second network device on the first time-frequency resource in the data sub-frame, and then receives a fourth target calibration sequence sent by the second network device through the network interface; and after receiving the second target calibration sequence on the second time-frequency resource in the data sub-frame, the first network device determines a third calibration coefficient based on the third calibration sequence, the fourth target calibration sequence, the second calibration sequence, and the second target calibration sequence, and calibrates a third radio signal based on the third calibration coefficient. A cell in which the fourth network device is located is adjacent to the cell in which the first network device is located. The second message includes the first calibration sequence and the location of the fifth time-frequency resource, and the fifth time-frequency resource is used by the fourth network device to send the first calibration sequence. The fourth target calibration sequence corresponds to the third calibration sequence. In this implementation, because the third calibration sequence is orthogonal to the first calibration sequence, even if the fifth time-frequency resource overlaps the first time-frequency resource, the first network device and the fourth network device can correctly transmit the foregoing calibration sequence. In this way, flexibility of transmitting the calibration sequence is improved.

In another possible implementation, after generating RRC signaling, the first network device sends the RRC signaling to a terminal. After receiving the RRC signaling, the terminal may determine the location that is of the first time-frequency resource and that is included in the RRC signaling. Then, the first network device sends indication information to the terminal, and the terminal does not demodulate data on the first time-frequency resource based on the indication information. In this way, calibration sequence transmission performed between the network devices and data transmission performed between the network device and the terminal are independent of each other, and do not interfere with each other.

In another possible implementation, the first network device generates a third message, and sends the third message to a fifth network device. The fifth network device does not transmit information on the first time-frequency resource based on the location that is of the first time-frequency resource and that is included in the third message. The cell in which the first network device is located is adjacent to a cell in which the fifth network device is located. In this implementation, the first network device may notify a network device in a neighboring cell of transmitting no information on the first time-frequency resource, to ensure that calibration sequence transmission is not interfered with. Optionally, the third message further includes a coding scheme of the first calibration sequence. The fifth network device may transmit, based on the coding scheme of the first calibration sequence, a calibration sequence orthogonal to the first calibration sequence, so that calibration sequence transmission in neighboring cells does not interfere with each other.

In another possible implementation, the first time-frequency resource includes one or two time domain symbols, and the second time-frequency resource and the first time-frequency resource include a same quantity of time domain symbols. It should be understood that a quantity of time domain symbols included in the first time-frequency resource is not limited to one or two. The second time-frequency resource and the first time-frequency resource may include different quantities of time domain symbols.

According to a second aspect, a signal processing method is provided. The method includes: A first network device receives a first target calibration sequence after sending a first calibration sequence on a first time-frequency resource in a data sub-frame, and receives a second target calibration sequence after sending a second calibration sequence on a second time-frequency resource in a data sub-frame; and then the first network device determines a calibration coefficient based on the first calibration sequence, the first target calibration sequence, the second calibration sequence, and the second target calibration sequence, and calibrates a radio signal based on the calibration coefficient. Because a quantity of time-frequency resources included in the data sub-frame is far greater than a quantity of time-frequency resources required by a calibration sequence, a problem that gap duration is insufficient to transmit the calibration sequence can be resolved.

In a possible implementation, the first network device generates RRC signaling, and sends the RRC signaling to a terminal. The terminal may determine the first time-frequency resource and the second time-frequency resource based on a location of the first time-frequency resource and a location of the second time-frequency resource that are included in the RRC signaling. After the first network device sends indication information to the terminal, the terminal does not demodulate data on the first time-frequency resource and data on the second time-frequency resource based on the indication information. In this way, data transmission is not affected. The indication information may occupy, but is not limited to, one bit.

In another possible implementation, before the first network device sends the first calibration sequence to the second network device on the first time-frequency resource in the data sub-frame, the first network device generates a message, where the message includes the location of the first time-frequency resource and the location of the second time-frequency resource. The first network device sends the message to a second network device, and the second network device does not transmit information on the first time-frequency resource and the second time-frequency resource based on the message. A cell in which the first network device is located is adjacent to a cell in which the second network device is located. In this implementation, a network device in a neighboring cell does not transmit information on the first time-frequency resource and the second time-frequency resource, and therefore, does not interfere with calibration sequence transmission performed by the first network device.

In another possible implementation, the first time-frequency resource includes one or two time domain symbols, and the second time-frequency resource and the first time-frequency resource include a same quantity of time domain symbols.

According to a third aspect, a first network device is provided. The first network device includes a receiving unit, a processing unit, a sending unit, and a network interface. The sending unit is configured to send a first calibration sequence to a second network device on a first time-frequency resource in a data sub-frame, where a cell in which the first network device is located is adjacent to a cell in which the second network device is located. The network interface is configured to receive a first target calibration sequence sent by the second network device, where the first target calibration sequence is a calibration sequence received by the second network device on the first time-frequency resource. The receiving unit is configured to receive a second target calibration sequence on a second time-frequency resource in a data sub-frame, where the second target calibration sequence corresponds to a second calibration sequence sent by the second network device on the second time-frequency resource. The processing unit is configured to: determine a first calibration coefficient based on the first calibration sequence, the first target calibration sequence, the pre-stored second calibration sequence, and the second target calibration sequence; and calibrate a first radio signal based on the first calibration coefficient. The sending unit may be but is not limited to a pRRU, an AAU, or an RRU, and the receiving unit may be but is not limited to a pRRU, an AAU, or an RRU.

In a possible implementation, the network interface is further configured to receive a first message sent by a third network device, where the first message includes the first calibration sequence and a location of a third time-frequency resource, a cell in which the third network device is located is adjacent to the cell in which the first network device is located, and the third time-frequency resource is used by the third network device to send the first calibration sequence. The sending unit is further configured to: when the location of the third time-frequency resource overlaps a location of the first time-frequency resource, send the first calibration sequence to the second network device on a fourth time-frequency resource in a data sub-frame, where the fourth time-frequency resource does not overlap the third time-frequency resource. The network interface is further configured to receive a third target calibration sequence sent by the second network device, where the third target calibration sequence is a calibration sequence received by the second network device on the fourth time-frequency resource. The receiving unit is further configured to receive the second target calibration sequence. The processing unit is further configured to: determine a second calibration coefficient based on the first calibration sequence, the third target calibration sequence, the second calibration sequence, and the second target calibration sequence; and calibrate a second radio signal based on the second calibration coefficient.

In another possible implementation, the network interface is further configured to receive a second message sent by a fourth network device, where the second message includes the first calibration sequence and a location of a fifth time-frequency resource, a cell in which the fourth network device is located is adjacent to the cell in which the first network device is located, and the fifth time-frequency resource is used by the fourth network device to send the first calibration sequence. The sending unit is further configured to: when the location of the fifth time-frequency resource overlaps the location of the first time-frequency resource, send a third calibration sequence to the second network device on the first time-frequency resource, where the first calibration sequence is orthogonal to the third calibration sequence. The network interface is further configured to receive the third calibration sequence sent by the second network device. The receiving unit is further configured to receive a fourth target calibration sequence sent by the second network device on the second time-frequency resource, where the fourth target calibration sequence corresponds to the third calibration sequence. The processing unit is further configured to determine a third calibration coefficient based on the third calibration sequence, the fourth target calibration sequence, the second calibration sequence, and the second target calibration sequence; and calibrate a third radio signal based on the third calibration coefficient.

In another possible implementation, the processing unit is further configured to generate RRC signaling, where the RRC signaling includes the location of the first time-frequency resource. The sending unit is further configured to send the RRC signaling to a terminal, and send indication information to the terminal, where the indication information indicates the terminal not to demodulate data on the first time-frequency resource.

In another possible implementation, the processing unit is further configured to generate a third message, where the third message includes the location of the first time-frequency resource. The sending unit is further configured to send the third message to a fifth network device, where the third message indicates the fifth network device not to transmit information on the first time-frequency resource, and the cell in which the first network device is located is adjacent to a cell in which the fifth network device is located. Optionally, the third message further includes a coding scheme of the first calibration sequence.

In another possible implementation, the first time-frequency resource includes one or two time domain symbols, and the second time-frequency resource and the first time-frequency resource include a same quantity of time domain symbols.

For term explanations, steps performed by the units, and beneficial effects in the third aspect, refer to corresponding descriptions in the first aspect.

According to a fourth aspect, a network device is provided. The network device includes a first sending unit, a first receiving unit, a second sending unit, a second receiving unit, and a processing unit. The first sending unit is configured to send a first calibration sequence on a first time-frequency resource in a data sub-frame. The first receiving unit is configured to receive a first target calibration sequence, where the first target calibration sequence corresponds to the first calibration sequence. The second sending unit is configured to send a second calibration sequence on a second time-frequency resource in a data sub-frame. The second receiving unit is configured to receive a second target calibration sequence, where the second target calibration sequence corresponds to the second calibration sequence. The processing unit is configured to: determine a calibration coefficient based on the first calibration sequence, the first target calibration sequence, the second calibration sequence, and the second target calibration sequence; and calibrate a radio signal based on the calibration coefficient.

In a possible implementation, the processing unit is further configured to generate RRC signaling, where the RRC signaling includes a location of the first time-frequency resource and a location of the second time-frequency resource. The first sending unit and the second sending unit are further configured to: send the RRC signaling to a terminal; and send indication information to the terminal, where the indication information indicates the terminal not to demodulate data on the first time-frequency resource and data on the second time-frequency resource.

In another possible implementation, the processing unit is further configured to generate a message, where the message includes the location of the first time-frequency resource and the location of the second time-frequency resource. The network interface further includes a network interface, where the network interface is configured to send the message to a second network device, where the message indicates the second network device not to transmit information on the first time-frequency resource and the second time-frequency resource, and a cell in which the first network device is located is adjacent to a cell in which the second network device is located.

In another possible implementation, the first time-frequency resource includes one or two time domain symbols, and the second time-frequency resource and the first time-frequency resource include a same quantity of time domain symbols.

For term explanations, steps performed by the units, and beneficial effects in the fourth aspect, refer to corresponding descriptions in the second aspect.

According to a fifth aspect, a network device is provided, including a processor and a memory. The memory is configured to store a program, and the processor executes the program to implement the information processing method according to the first aspect.

According to a sixth aspect, a computer-readable storage medium is provided. The computer-readable storage medium stores instructions. When the instructions are run on a computer, the computer is enabled to perform the method according to the foregoing aspects.

According to a seventh aspect, a computer program product including instructions is provided. When the computer program product runs on a computer, the computer is enabled to perform the information processing method according to the first aspect.

According to an eighth aspect, a chip system is provided. The chip system includes at least one processor, and the processor is coupled to a memory. The memory is configured to store a computer program or instructions, and the processor is configured to execute the computer program or the instructions, to implement the information processing method according to the first aspect.

### BRIEF DESCRIPTION OF DRAWINGS

FIG. 1 is a schematic diagram of an existing channel calibration scenario;
FIG. 2 is a schematic diagram of a frame including a calibration sequence;
FIG. 3 is a schematic diagram of an application scenario according to an embodiment of this application;
FIG. 4 is another schematic diagram of an application scenario according to an embodiment of this application;
FIG. 5 is a flowchart of a signal processing method according to an embodiment of this application;
FIG. 6 is a schematic diagram of a frame including a calibration sequence according to an embodiment of this application;
FIG. 7 is another schematic diagram of a frame including a calibration sequence according to an embodiment of this application;
FIG. 8 is a schematic diagram of sending a first calibration sequence on different time-frequency resources according to an embodiment of this application;
FIG. 9 is another schematic diagram of sending a first calibration sequence on different time-frequency resources according to an embodiment of this application;
FIG. 10 is another flowchart of a signal processing method according to an embodiment of this application;
FIG. 11 is a diagram of a structure of a network device according to an embodiment of this application;
FIG. 12 is another diagram of a structure of a network device according to an embodiment of this application; and
FIG. 13 is another diagram of a structure of a network device according to an embodiment of this application.

### DESCRIPTION OF EMBODIMENTS

A signal processing method in this application may be applied to a beamforming scenario. Specifically, beamforming may be performed by one base station, or beamforming may be performed by a plurality of base stations. The following describes two beamforming scenarios.

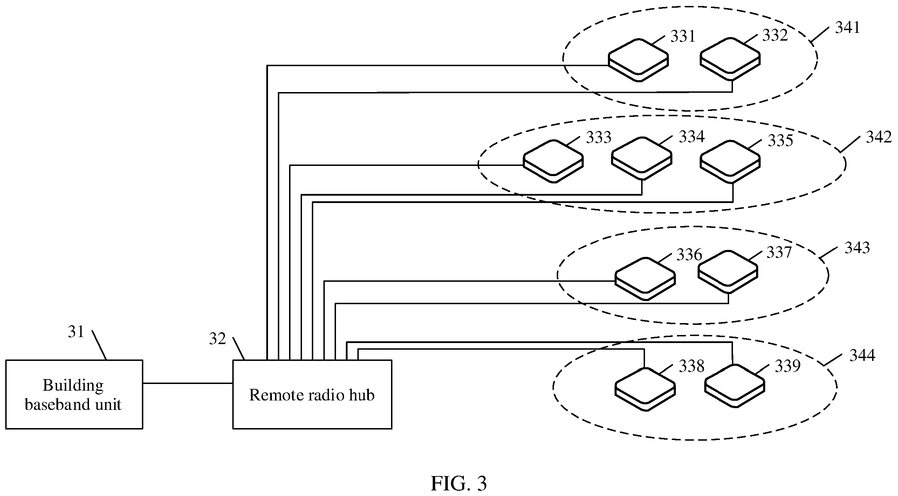

Refer to FIG. 3. In an example, a base station includes a building baseband unit 31, a remote radio hub 32, and a plurality of pRRUs. The building baseband unit 31 is connected to the remote radio hub 32 through a communication cable, and the remote radio hub 32 is connected to each pRRU through a communication cable.

The base station includes a pRRU 331, a pRRU 332, a pRRU 333, a pRRU 334, a pRRU 335, a pRRU 336, a pRRU 337, a pRRU 338, and a pRRU 339. The pRRU 331 and the pRRU 332 are located in a cell 341, the pRRU 333, the pRRU 334, and the pRRU 335 are located in a cell 342, the pRRU 336 and the pRRU 337 are located in a cell 343, and the pRRU 338 and the pRRU 339 are located in a cell 344. A plurality of pRRUs in each cell can jointly perform beamforming. It should be understood that a quantity of pRRUs connected to the remote radio hub 32 is not limited to that in the foregoing example. A quantity of pRRUs included in one cell is not limited to that in the foregoing example. The pRRUs in each cell may be located on a same floor, but are not limited to being located on a same floor.

For example, two pRRUs perform beamforming. To keep phases and amplitudes of signals transmitted by antenna headends of the two pRRUs consistent, the two pRRUs respectively send calibration sequences through transmitting channels, and then receive calibration sequences through receiving channels. Then, the building baseband unit 31 determines a calibration coefficient based on the calibration sequences received from different receiving channels, and then calibrates a radio signal based on the calibration coefficient. A channel calibration process for a plurality of pRRUs is similar to that for two pRRUs.

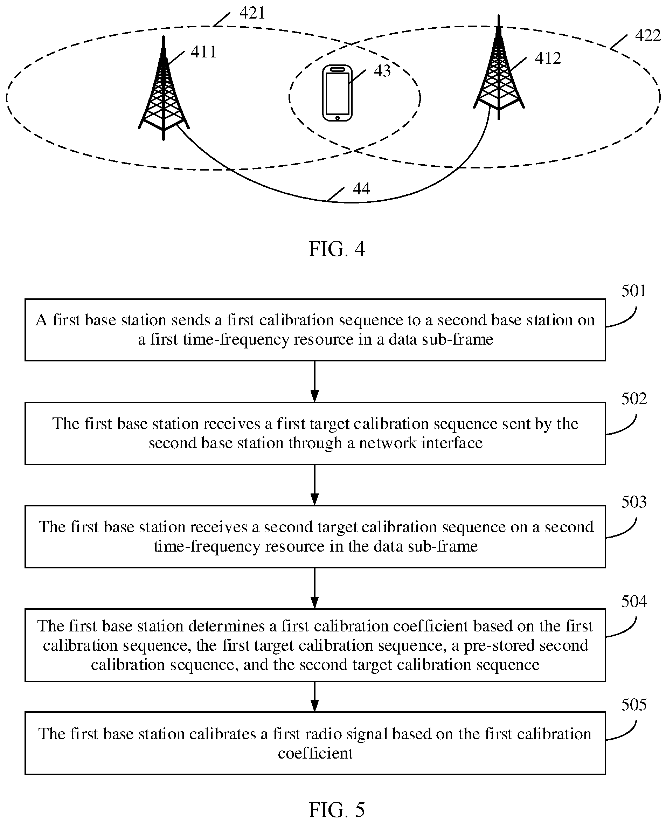

Refer to FIG. 4. In another example, a cell 421 and a cell 422 are neighboring cells. A base station 411 is located in the cell 421, a base station 412 is located in the cell 422, and the base station 411 and the base station 412 may directly transmit a message, instructions, or data through a communication cable 44. The base station 411 and the base station 412 may provide a communication service for a terminal 43 by using a coordinated multiple points (coordinated multiple points, CoMP) technology. CoMP transmission means that a plurality of transmission points (for example, base stations) at different geographical locations collaboratively transmit data for one terminal or jointly receive data sent by one terminal. It should be understood that a quantity of base stations that perform CoMP is not limited to two, and a quantity of terminals is also not limited to one.

For example, two pRRUs perform beamforming. To keep phases and amplitudes of signals received or sent by antenna headends of the two base stations consistent, the two base stations separately send calibration sequences. One base station determines a calibration coefficient based on a calibration sequence received from an X2 interface and a calibration sequence received from a radio channel, and then calibrates a radio signal based on the calibration coefficient. A channel calibration process for a plurality of base stations is similar to that for two base stations.

In the conventional technology, a calibration sequence is sent in a gap, and the calibration sequence is a calibration signal sequence. In some scenarios, the gap occupies two to four time domain symbols. In other scenarios, the gap occupies one to two time domain symbols. Due to factors such as pRRU receiving/sending conversion and air interface transmission delay protection, a quantity of time domain symbols available for the gap is less than that of time domain symbols occupied by the gap. For example, in some scenarios, the gap occupies two time domain symbols, and a quantity of time domain symbols available for the gap is less than two. When the calibration sequence occupies two time domain symbols, the gap is insufficient for transmitting the calibration sequence. Therefore, this application provides a plurality of signal processing methods to resolve a problem of insufficient transmission calibration sequence resources.

A network device may be but is not limited to a base station. For example, the network device is a base station. First, a signal processing method for a plurality of base stations is described. Refer to FIG. 5. An embodiment of a signal processing method in this application includes the following steps.

Step 501: A first base station sends a first calibration sequence to a second base station on a first time-frequency resource in a data sub-frame.

In this embodiment, the first base station may be any one of the plurality of base stations. The data sub-frame may be an uplink sub-frame or a downlink sub-frame. For example, the first time-frequency resource may belong to a physical downlink shared channel (physical downlink shared channel, PDSCH) or a physical uplink shared channel (physical uplink shared channel, PUSCH) of the data sub-frame. After obtaining the first calibration sequence, the first base station may periodically or aperiodically send the first calibration sequence.

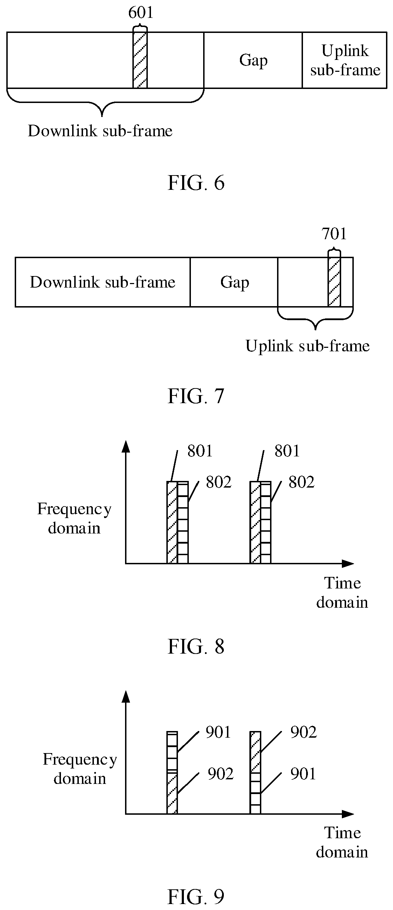

Optionally, a first time-frequency resource 601 belongs to a downlink sub-frame, as shown in FIG. 6. In another optional manner, a first time-frequency resource 701 belongs to an uplink sub-frame, as shown in FIG. 7. It should be understood that a location of the first time-frequency resource or a second time-frequency resource in the data sub-frame may be set based on an actual situation. It should be understood that the frame shown in FIG. 6 or FIG. 7 further includes a plurality of downlink sub-frames and uplink sub-frames that are not shown. The sub-frame in which the first time-frequency resource is located may be any downlink sub-frame or uplink sub-frame.

Step 502: The first base station receives a first target calibration sequence sent by the second base station through a network interface.

After the first base station sends the first calibration sequence to the second base station, the first calibration sequence is attenuated to the first target calibration sequence at the second base station through a radio channel. A calibration sequence received by the second base station on the first time-frequency resource is the first target calibration sequence. Then, the second base station sends the first target calibration sequence to the first base station through the network interface. The network interface is an interface used for communication between base stations, and may be specifically but is not limited to an X2 interface or an Xn interface.

Step 503: The first base station receives a second target calibration sequence on a second time-frequency resource in a data sub-frame.

A second network device sends a second calibration sequence on the second time-frequency resource in the data sub-frame. The second calibration sequence is attenuated to the second target calibration sequence at the first base station through the radio channel. A calibration sequence received by the first base station on the second time-frequency resource is the second target calibration sequence. Therefore, the second target calibration sequence corresponds to the second calibration sequence sent by the second network device on the second time-frequency resource.

It should be noted that a bandwidth occupied by the first time-frequency resource may be an entire bandwidth or a partial bandwidth of a cell, and the second time-frequency resource and the first time-frequency resource may occupy a same bandwidth, or may occupy different bandwidths. The first calibration sequence and the second calibration sequence may be the same, or may be different.

It should be understood that step 501 and step 502 are a process in which the first base station sends the first calibration sequence and receives the first target calibration sequence, and step 503 is a process in which the first base station receives the second target calibration sequence. The two processes are independent of each other and have no fixed sequence.

Step 504: The first base station determines a first calibration coefficient based on the first calibration sequence, the first target calibration sequence, the pre-stored second calibration sequence, and the second target calibration sequence.

Before step 501 or step 503, the second base station may send a second calibration sequence to the first base station through the network interface, and the first base station may store the second calibration sequence.

Specifically, the first base station may determine a channel matrix of a transmission path from the first base station to the second base station based on the first calibration sequence and the first target calibration sequence, and the first base station may determine a channel matrix of a transmission path from the second base station to the first base station based on the second calibration sequence and the second target calibration sequence. The first base station may determine, based on the foregoing two channel matrices, the first calibration coefficient used to adjust an amplitude and/or a phase.

Step 505: The first base station calibrates a first radio signal based on the first calibration coefficient.

In this embodiment, the first base station may calibrate the first radio signal based on the first calibration coefficient, so that phases and/or amplitudes of signals sent by the first base station and the second base station are consistent. It should be understood that the first calibration sequence may be any calibration sequence used for channel calibration. The name is used to distinguish the first calibration sequence from another calibration sequence in this application, for example, the second calibration sequence or a third calibration sequence. The first radio signal may be any signal received by a base station or a signal that the base station prepares to send. The name is used to distinguish the first radio signal from another radio signal in this application, for example, a second radio signal or a third radio signal. A radio signal may be but is not limited to a control signal, a data signal, or a reference signal.

In addition, because a quantity of time domain symbols included in the data sub-frame is far greater than a quantity of time-frequency resources (for example, two time domain symbols) required by a calibration sequence, the data sub-frame can meet a transmission requirement of the calibration sequence, so that a problem that gap resources are insufficient to transmit the calibration sequence is resolved.

In actual application, base stations of neighboring cells may use different sub-frame ratios when receiving signals. For example, a sub-frame 1 and a sub-frame 6 in time division duplex (time division duplex, TDD) sub-frames configured by a base station A are special sub-frames. In TDD sub-frames configured by a base station B, a sub-frame 1 is a special sub-frame. A special sub-frame includes a DwPTS, a gap, and an UpPTS, and is usually denoted as an S sub-frame. Because sub-frame ratios of the base station A and the base station B are different, when the base station A sends a calibration sequence through the gap, the base station B may send downlink data on a same time-frequency resource. In this way, transmission of the calibration sequence is interfered with. This application provides a signal processing method, to reduce interference caused by transmitted data to a calibration sequence.

Based on the embodiment shown in FIG. 5, in an optional embodiment, the signal processing method further includes: The first network device receives a first message sent by a third network device, where the first message includes a first calibration sequence and a location of a third time-frequency resource; when the location of the third time-frequency resource overlaps a location of the first time-frequency resource, the first network device sends the first calibration sequence to the second network device on a fourth time-frequency resource in a data sub-frame; then, the first network device receives a third target calibration sequence sent by the second network device through the network interface, where the third target calibration sequence is a calibration sequence received by the second network device on the fourth time-frequency resource; when the second network device sends the second calibration sequence on the second time-frequency resource, the first network device receives the second target calibration sequence on the second time-frequency resource; and the first network device determines a second calibration coefficient based on the first calibration sequence, the third target calibration sequence, the second calibration sequence, and the second target calibration sequence, and calibrates a second radio signal based on the second calibration coefficient.

In this embodiment, the first network device receives a first message sent by a network device (for example, the third network device) in a neighboring cell. When the location of the third time-frequency resource overlaps the location of the first time-frequency resource, it indicates that the third time-frequency resource and the first time-frequency resource include a same time-frequency resource (for example, a resource element). It may also be determined that there is interference between sending of the first calibration sequence by the first network device and sending of the first calibration sequence by the third network device. Therefore, the first network device selects the fourth time-frequency resource that does not overlap the third time-frequency resource, and sends the first calibration sequence on the fourth time-frequency resource. In this way, the first calibration sequence can be sent on different time-frequency resources. When network devices in neighboring cells use different sub-frame configurations or network devices in neighboring cells belong to different vendors, transmission of the first calibration sequences by the network devices in the neighboring cells does not interfere with each other.

When the location of the third time-frequency resource does not overlap the location of the first time-frequency resource, it indicates that sending of the first calibration sequence by the first network device and sending of the first calibration sequence by the third network device do not interfere with each other, and therefore, the first network device may still send the first calibration sequence on the first time-frequency resource.

In an optional embodiment, a fourth time-frequency resource 802 and a third time-frequency resource 801 may occupy a same frequency domain resource and different time domain symbols, as shown in FIG. 8. In another optional embodiment, a fourth time-frequency resource 902 and a third time-frequency resource 901 may occupy a same time domain symbol and different frequency domain resources, as shown in FIG. 9.

Based on the embodiment shown in FIG. 5, in another optional embodiment, the signal processing method further includes: The first network device receives a second message sent by a fourth network device, where the second message includes a first calibration sequence and a location of a fifth time-frequency resource; when the location of the fifth time-frequency resource overlaps a location of the first time-frequency resource, the first network device sends a third calibration sequence to the second network device on the first time-frequency resource; then, the first network device receives a fourth target calibration sequence sent by the second network device through the network interface, where the fourth target calibration sequence corresponds to the third calibration sequence; when the second network device sends the second calibration sequence on the second time-frequency resource, the first network device receives the second calibration sequence on the second time-frequency resource; and then the first network device determines a third calibration coefficient based on the third calibration sequence, the fourth target calibration sequence, the second calibration sequence, and the second target calibration sequence, and calibrates a third radio signal based on the third calibration coefficient. A cell in which the fourth network device is located is adjacent to the cell in which the first network device is located.

In this embodiment, the first network device may determine, based on the second message, that sending of the first calibration sequence on the first time-frequency resource by the first network device and sending of the first calibration sequence on the fifth time-frequency resource by the fourth network device interfere with each other. Then, the first network device sends the third calibration sequence on the first time-frequency resource, and the fourth network device may send the first calibration sequence on the fifth time-frequency resource. Because the third calibration sequence is orthogonal to the first calibration sequence, the fourth network device may obtain the fourth target calibration sequence through demodulation, and then send the fourth target calibration sequence to the first network device. Next, the first network device determines the third calibration coefficient based on the third calibration sequence, the fourth target calibration sequence, the second calibration sequence, and the second target calibration sequence, and then calibrates the third radio signal based on the third calibration coefficient. In this way, another method for transmitting a calibration sequence is provided, to ensure correct transmission of the calibration sequence when network devices in neighboring cells use different sub-frame configurations or network devices in neighboring cells belong to different vendors.

Based on the embodiment shown in FIG. 5, in another optional embodiment, the signal processing method further includes: After the terminal initiates a random access request, the first network device generates radio resource control (radio resource control, RRC) signaling, sends the RRC signaling to the terminal, and then sends indication information to the terminal.

In this embodiment, the RRC signaling may be but is not limited to an RRC connection reconfiguration message, and the RRC signaling includes the location of the first time-frequency resource. After receiving the RRC signaling sent by the network device, the terminal may determine the location of the first time-frequency resource based on the RRC signaling. After receiving the indication information, the terminal does not demodulate data on the first time-frequency resource based on the indication information. In this way, calibration sequence transmission and data transmission do not interfere with each other. A quantity of bits occupied by the indication information may be but is not limited to one bit.

Based on the embodiment shown in FIG. 5, in another optional embodiment, the first network device generates a third message, where the third message includes the location of the first time-frequency resource. The first network device sends the third message to a fifth network device, and the fifth network device does not transmit information on the first time-frequency resource based on the third message. The cell in which the first network device is located is adjacent to a cell in which the fifth network device is located.

It should be understood that the first network device may send the third message to all or some network devices in a neighboring cell. When the first network device sends or receives a calibration sequence, the network device in the neighboring cell does not transmit information, to reduce interference to calibration sequence transmission.

Optionally, the third message further includes a coding scheme of the first calibration sequence. The coding scheme may be code domain information. In this way, a base station in the neighboring cell may select another coding scheme based on the coding scheme of the first calibration sequence, and then generates the second calibration sequence based on the selected coding scheme. When the second calibration sequence is orthogonal to the first calibration sequence, the base station in the neighboring cell and the first network device may transmit the orthogonal calibration sequences on a same time-frequency resource, to fully utilize the time-frequency resource. The third message may further include a number of the first calibration sequence. In this way, the first network device may find the first calibration sequence from pre-stored calibration sequences based on the number.

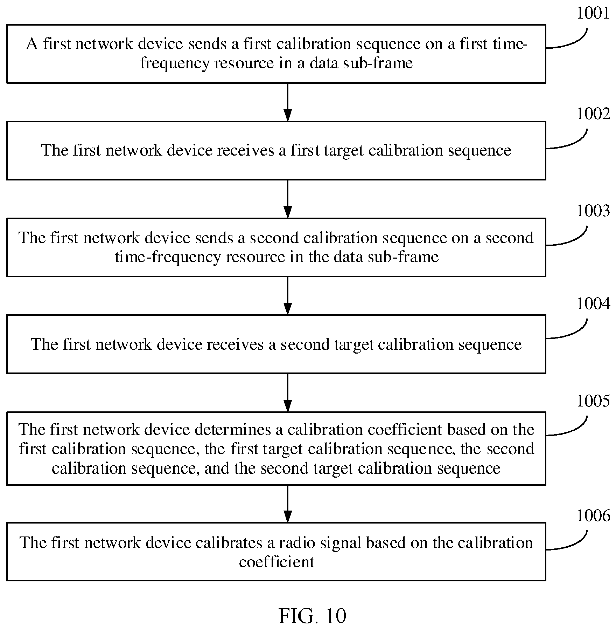

In addition, a signal processing method for a network device is introduced. Refer to FIG. 10. An embodiment of a data processing method in this application includes the following steps.

Step 1001: A first network device sends a first calibration sequence on a first time-frequency resource in a data sub-frame.

Step 1002: The first network device receives a first target calibration sequence.

In this embodiment, a network device may include a BBU, an rhub, a first pRRU, and a second pRRU. The BBU may obtain the first calibration sequence and a second calibration sequence. Then, the BBU maps the first calibration sequence to the first time-frequency resource and maps the second calibration sequence to a second time-frequency resource. The first pRRU sends the first calibration sequence on the first time-frequency resource in the data sub-frame, and the first calibration sequence is attenuated to the first target calibration sequence at the second pRRU through a radio channel. Therefore, the first target calibration sequence corresponds to the first calibration sequence. After receiving the first target calibration sequence on the first time-frequency resource, the second pRRU sends the first target calibration sequence to the BBU.

The first pRRU may be any pRRU in a base station. The data sub-frame may be an uplink sub-frame or a downlink sub-frame, and may be specifically but is not limited to a PDSCH or a PUSCH. The first time-frequency resource includes one or two time domain symbols. The first pRRU may periodically send the first calibration sequence, or may aperiodically send the first calibration sequence.

Step 1003: The first network device sends a second calibration sequence on a second time-frequency resource in a data sub-frame.

Step 1004: The first network device receives a second target calibration sequence.

The second pRRU sends the second calibration sequence on the second time-frequency resource in the data sub-frame, and the second calibration sequence is attenuated to the second target calibration sequence at the first pRRU through the radio channel. Therefore, the second target calibration sequence corresponds to the second calibration sequence. The first pRRU receives the second target calibration sequence on the second time-frequency resource, and then sends the second target calibration sequence to the BBU.

It should be understood that the second time-frequency resource and the first time-frequency resource may include a same quantity of time domain symbols, or may include different quantities of time domain symbols. A bandwidth occupied by the first time-frequency resource may be an entire bandwidth or a partial bandwidth of a cell, and the second time-frequency resource and the first time-frequency resource occupy a same bandwidth. A process of receiving and sending the calibration sequence described in step 1001 and step 1002 is independent of a process of receiving and sending the calibration sequence described in step 1003 and step 1004, and the two processes have no fixed sequence.

Step 1005: The first network device determines a calibration coefficient based on the first calibration sequence, the first target calibration sequence, the second calibration sequence, and the second target calibration sequence.

Specifically, the BBU may determine a channel matrix based on the received first calibration sequence and the first target calibration sequence, may determine another channel matrix based on the received second calibration sequence and the second target calibration sequence, and may determine the calibration coefficient based on the foregoing two channel matrices.

Step 1006: The first network device calibrates a radio signal based on the calibration coefficient.

Optionally, the BBU calibrates the radio signal based on the calibration coefficient. Alternatively, the first pRRU or the second pRRU calibrates the radio signal based on the calibration coefficient. The radio signal may be a signal received by the base station or a signal that the base station prepares to send.

In this embodiment, the first network device may calculate the calibration coefficient based on the foregoing calibration sequence, and calibrate the radio signal based on the calibration coefficient, so that phases or amplitudes of radio frequency signals sent by the first pRRU and the second pRRU are consistent.

In addition, because time-frequency resources included in the data sub-frame have time domain symbols far greater than two, the data sub-frame can meet a transmission requirement of the calibration sequence, so that a problem that gap duration is insufficient to transmit the calibration sequence is resolved.

In an optional embodiment, the signal processing method further includes: After generating RRC signaling, the first network device sends the RRC signaling to a terminal, and then sends indication information to the terminal.

In this embodiment, the RRC signaling includes a location of the first time-frequency resource and a location of the second time-frequency resource. The indication information indicates the terminal not to demodulate data on the first time-frequency resource and data on the second time-frequency resource. In this way, data transmission is not affected. Therefore, calibration sequence transmission performed by the first network device and data transmission performed between the first network device and the terminal are independent of each other, and do not interfere with each other.

In another optional embodiment, before the first network device sends the first calibration sequence to the second network device on the first time-frequency resource in the data sub-frame, the first network device generates a message, and sends the message to a second network device. The second network device does not transmit information on the first time-frequency resource and the second time-frequency resource based on the message. In this way, calibration sequence transmission performed by the first network device is not interfered with.

In this embodiment, the message includes the location of the first time-frequency resource and the location of the second time-frequency resource, and the message indicates the second network device not to transmit information on the first time-frequency resource and the second time-frequency resource. A cell in which the first network device is located is adjacent to a cell in which the second network device is located.

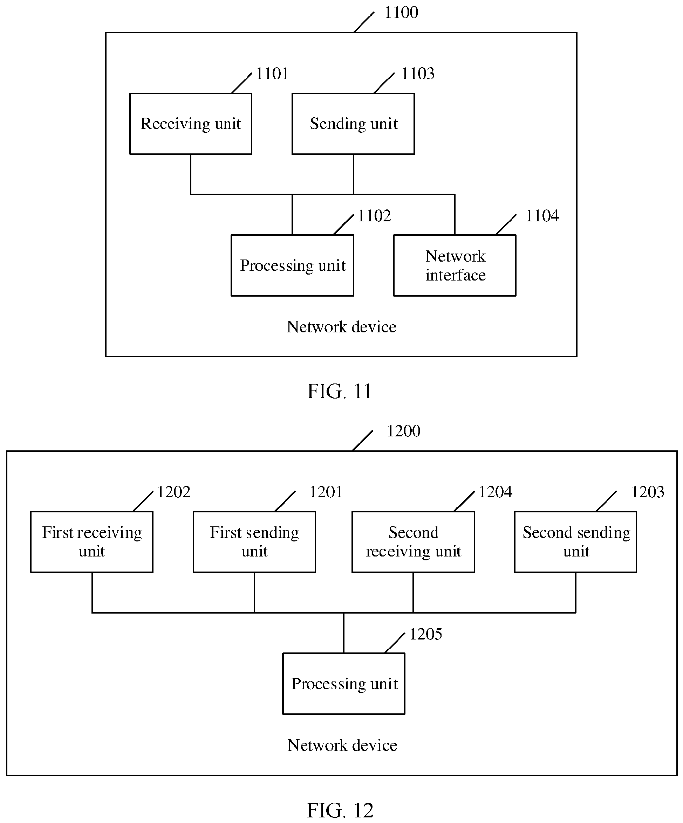

The foregoing describes the signal processing method in this application. The following describes a network device used to implement the foregoing signal processing method in this application. Refer to FIG. 11. An embodiment of a network device 1100 in this application includes: a receiving unit 1101, a processing unit 1102, a sending unit 1103, and a network interface 1104 that are connected through a bus.

The sending unit 1103 is configured to send a first calibration sequence to a second network device on a first time-frequency resource in a data sub-frame, where a cell in which the first network device is located is adjacent to a cell in which the second network device is located.

The network interface 1104 is configured to receive a first target calibration sequence sent by the second network device, where the first target calibration sequence is a calibration sequence received by the second network device on the first time-frequency resource.

The receiving unit 1101 is configured to receive a second target calibration sequence on a second time-frequency resource in a data sub-frame, where the second target calibration sequence corresponds to a second calibration sequence sent by the second network device on the second time-frequency resource.

The processing unit 1102 is configured to: determine a first calibration coefficient based on the first calibration sequence, the first target calibration sequence, the pre-stored second calibration sequence, and the second target calibration sequence; and calibrate a first radio signal based on the first calibration coefficient.

The network device 1100 in this embodiment can implement the steps performed by the first network device in the embodiment shown in FIG. 5 or the optional embodiments.

In an optional embodiment,
the network interface 1104 is further configured to receive a first message sent by a third network device, where the first message includes the first calibration sequence and a location of a third time-frequency resource, a cell in which the third network device is located is adjacent to the cell in which the first network device is located, and the third time-frequency resource is used by the third network device to send the first calibration sequence;
the sending unit 1103 is further configured to: when the location of the third time-frequency resource overlaps a location of the first time-frequency resource, send the first calibration sequence to the second network device on a fourth time-frequency resource in a data sub-frame, where the fourth time-frequency resource does not overlap the first time-frequency resource;
the network interface 1104 is further configured to receive a third target calibration sequence sent by the second network device, where the third target calibration sequence is a calibration sequence received by the second network device on the fourth time-frequency resource;
the receiving unit 1101 is further configured to receive the second target calibration sequence on the second time-frequency resource; and
the processing unit 1102 is further configured to: determine a second calibration coefficient based on the first calibration sequence, the third target calibration sequence, the second calibration sequence, and the second target calibration sequence; and calibrate a second radio signal based on the second calibration coefficient.

In another optional embodiment,
the network interface 1104 is further configured to receive a second message sent by a fourth network device, where the second message includes the first calibration sequence and a location of a fifth time-frequency resource, a cell in which the fourth network device is located is adjacent to the cell in which the first network device is located, and the fifth time-frequency resource is used by the fourth network device to send the first calibration sequence;
the sending unit 1103 is further configured to: when the location of the fifth time-frequency resource overlaps a location of the first time-frequency resource, send a third calibration sequence to the second network device on the first time-frequency resource, where the first calibration sequence is orthogonal to the third calibration sequence;
the network interface 1104 is further configured to receive a fourth target calibration sequence sent by the second network device, where the fourth target calibration sequence corresponds to the third calibration sequence;
the receiving unit 1101 is further configured to receive the second target calibration sequence on the second time-frequency resource in the data sub-frame; and
the sending unit 1103 is further configured to: determine a third calibration coefficient based on the third calibration sequence, the fourth target calibration sequence, the second calibration sequence, and the second target calibration sequence; and calibrate a third radio signal based on the third calibration coefficient.

In another optional embodiment,
the processing unit 1102 is further configured to generate RRC signaling, where the RRC signaling includes the location of the first time-frequency resource;
the sending unit 1103 is further configured to send the RRC signaling to a terminal; and
the sending unit 1103 is further configured to send indication information to the terminal, where the indication information indicates the terminal not to demodulate data on the first time-frequency resource.

In another optional embodiment,
the processing unit 1102 is further configured to generate a third message, where the third message includes the location of the first time-frequency resource; and
the sending unit 1103 is further configured to send the third message to a fifth network device, where the third message indicates the fifth network device not to transmit information on the first time-frequency resource, and the cell in which the first network device is located is adjacent to a cell in which the fifth network device is located.

In another optional embodiment, the first time-frequency resource includes one or two time domain symbols, and the second time-frequency resource and the first time-frequency resource include a same quantity of time domain symbols.

In another optional embodiment, the sending unit is a pRRU, an active antenna unit (active antenna unit, AAU), or a remote radio unit (remote radio unit, RRU); and the receiving unit is a pRRU, an AAU, or an RRU.

For term explanations, steps performed by the units, and beneficial effects in the embodiment shown in FIG. 11, refer to corresponding descriptions in the embodiment shown in FIG. 5 or the optional embodiments.

Refer to FIG. 12. A network device 1200 provided in this application can implement the steps performed by the first network device in the embodiment shown in FIG. 10. An embodiment of the network device 1200 includes:
a first sending unit 1201, configured to send a first calibration sequence on a first time-frequency resource in a data sub-frame;
a first receiving unit 1202, configured to receive a first target calibration sequence, where the first target calibration sequence corresponds to the first calibration sequence;
a second sending unit 1203, configured to send a second calibration sequence on a second time-frequency resource in a data sub-frame;
a second receiving unit 1204, configured to receive a second target calibration sequence, where the second target calibration sequence corresponds to the second calibration sequence; and
a processing unit 1205, configured to: determine a calibration coefficient based on the first calibration sequence, the first target calibration sequence, the second calibration sequence, and the second target calibration sequence; and calibrate a first radio signal based on the calibration coefficient.

In this embodiment, the first sending unit 1201, the first receiving unit 1202, the second sending unit 1203, the second receiving unit 1204, and the processing unit 1205 are connected through a bus. The receiving unit and the sending unit may be independent, or may be integrated together. For example, one RRU may perform operations of the first sending unit 1201 and the second receiving unit 1204, and the other RRU may perform operations of the first receiving unit 1202 and the second sending unit 1203.

In an optional embodiment,
the processing unit 1205 is configured to generate RRC signaling, where the RRC signaling includes a location of the first time-frequency resource and a location of the second time-frequency resource; and
the first sending unit 1201 and the second sending unit 1203 are further configured to: send the RRC signaling to a terminal; and send indication information to the terminal, where the indication information indicates the terminal not to demodulate data on the first time-frequency resource and data on the second time-frequency resource.

In another optional embodiment,
the processing unit 1205 is further configured to generate a message including the location of the first time-frequency resource and the location of the second time-frequency resource; and
the network device further includes a network interface, and the network interface is configured to send the message to the second network device, where the message indicates the second network device not to transmit information on the first time-frequency resource and the second time-frequency resource, and a cell in which the first network device is located is adjacent to a cell in which the second network device is located.

In another optional embodiment, the first time-frequency resource includes one or two time domain symbols, and the second time-frequency resource and the first time-frequency resource include a same quantity of time domain symbols.

For term explanations, steps performed by the units, and beneficial effects in the embodiment shown in FIG. 12, refer to corresponding descriptions in the embodiment shown in FIG. 10 or the optional embodiments.

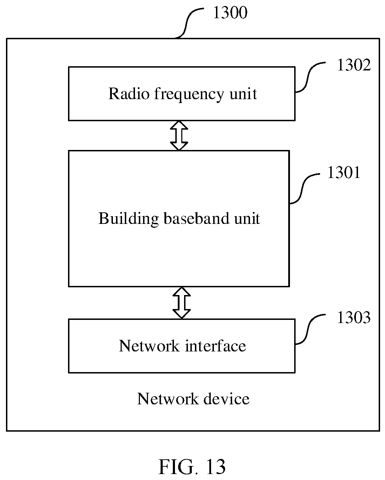

Refer to FIG. 13. Another embodiment of a network device 1300 provided in this application includes: a building baseband unit 1301, a radio frequency unit 1302, and a network interface 1303.

In this embodiment, the building baseband unit 1301 may execute the signal processing method in the embodiment shown in FIG. 5 or the optional embodiments, or execute the signal processing method in the embodiment shown in FIG. 10 or the optional embodiments. The building baseband unit 1301 may implement functions of the processing unit in the embodiment shown in FIG. 11 or FIG. 12. The radio frequency unit 1302 may implement functions of the receiving unit, the sending unit, the first receiving unit, the second receiving unit, the first sending unit, and the second sending unit in the embodiment shown in FIG. 11 or FIG. 12. The network interface 1303 may implement a function of the network interface in the embodiment shown in FIG. 11 or FIG. 12.

The radio frequency unit 1302 includes an antenna unit and an RRU, a pRRU, or an AAU. In the radio frequency unit 1302, there may be one or more RRUs, pRRUs, or AAUs. The antenna unit may include one or more antennas. It should be understood that the antenna unit may alternatively be separated from the RRU, the pRRU, or the AAU.

The network interface 1303 is configured to communicate with a core network device or another network device.

It should be understood that the building baseband unit 1301 may include a processor and a memory. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like. The memory may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor. It should be noted that the memory described in this specification aims to include but is not limited to these memories and any memory of another proper type.

It should be noted that, content such as information exchange between the modules/units of the apparatus and the execution processes thereof is based on the same idea as the method embodiments of this application, and produces the same technical effects as the method embodiments of this application. For specific content, refer to the foregoing descriptions in the method embodiments of this application. Details are not described herein again.

This application provides a computer-readable storage medium. The computer-readable storage medium stores a computer program, and when the computer program is run on a computer, the computer is enabled to perform the signal processing method in the foregoing embodiment.

This application further provides a computer program product including instructions. When the computer program product runs on a computer, the computer is enabled to perform the signal processing method in the foregoing shown embodiment or the optional embodiments.

This application further provides a chip system. The chip system includes a processor and a memory that are coupled to each other. The memory is configured to store a computer program or instructions, and the processor is configured to execute the computer program or the instructions stored in the memory, so that a network device performs the signal processing method in the foregoing embodiment. Optionally, the memory is a memory in a chip, for example, a register or a cache, or the memory may be a memory that is outside a chip and that is in a station, for example, a read-only memory (read-only memory, ROM), another type of static storage device that can store static information and instructions, or a random access memory (random access memory, RAM). The processor mentioned above may be a general-purpose central processing unit, a microprocessor, an application-specific integrated circuit (application-specific integrated circuit, ASIC) or one or more integrated circuits configured to implement the foregoing signal processing method.

In addition, it should be noted that the described apparatus embodiments are merely examples. The units described as separate parts may or may not be physically separate, and parts displayed as units may or may not be physical units. In other words, the parts may be located in one location, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description in the foregoing implementations, a person skilled in the art may clearly understand that this application may be implemented by using software in combination with necessary universal hardware, or certainly, may be implemented by using dedicated hardware, including an application-specific integrated circuit, a dedicated CPU, a dedicated memory, a dedicated component, or the like. Usually, all functions completed by a computer program may be easily implemented by using corresponding hardware, and a specific hardware structure used to implement a same function may also be in various forms, for example, a form of an analog circuit, a digital circuit, or a dedicated circuit. However, for this application, software program implementation is a better implementation in most cases. Based on such an understanding, the technical solutions of this application essentially or the part that contributes to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A signal processing method, comprising:
sending, by a first network device, a first calibration sequence to a second network device on a first time-frequency resource in a data sub-frame, wherein a cell (341, 342, 343, 344) in which the first network device is located is adjacent to a cell (341, 342, 343, 344) in which the second network device is located;
receiving, by the first network device, a first target calibration sequence sent by the second network device through a network interface (1104, 1303), wherein the first target calibration sequence is a calibration sequence received by the second network device on the first time-frequency resource;
receiving, by the first network device, a second target calibration sequence on a second time-frequency resource in a data sub-frame, wherein the second target calibration sequence corresponds to a second calibration sequence sent by the second network device on the second time-frequency resource;
determining, by the first network device, a first calibration coefficient based on the first calibration sequence, the first target calibration sequence, the pre-stored second calibration sequence, and the second target calibration sequence; and
calibrating, by the first network device, a first radio signal based on the first calibration coefficient, and **characterized in that** the method further comprises:
receiving, by the first network device, a first message sent by a third network device, wherein the first message comprises the first calibration sequence and a location of a third time-frequency resource, a cell (341, 342, 343, 344) in which the third network device is located is adjacent to the cell (341, 342, 343, 344) in which the first network device is located, and the third time-frequency resource is used by the third network device to send the first calibration sequence;
when the location of the third time-frequency resource overlaps a location of the first time-frequency resource, sending, by the first network device, the first calibration sequence to the second network device on a fourth time-frequency resource in a data sub-frame, wherein the fourth time-frequency resource does not overlap the third time-frequency resource;
receiving, by the first network device, a third target calibration sequence sent by the second network device through the network interface (1104, 1303), wherein the third target calibration sequence is a calibration sequence received by the second network device on the fourth time-frequency resource;
receiving, by the first network device, the second target calibration sequence on the second time-frequency resource in the data sub-frame;
determining, by the first network device, a second calibration coefficient based on the first calibration sequence, the third target calibration sequence, the second calibration sequence, and the second target calibration sequence; and
calibrating, by the first network device, a second radio signal based on the second calibration coefficient.

2. The method according to claim 1, wherein the method further comprises:
receiving, by the first network device, a second message sent by a fourth network device, wherein the second message comprises the first calibration sequence and a location of a fifth time-frequency resource, a cell (341, 342, 343, 344) in which the fourth network device is located is adjacent to the cell (341, 342, 343, 344) in which the first network device is located, and the fifth time-frequency resource is used by the fourth network device to send the first calibration sequence;
when the location of the fifth time-frequency resource overlaps a location of the first time-frequency resource, sending, by the first network device, a third calibration sequence to the second network device on the first time-frequency resource, wherein the first calibration sequence is orthogonal to the third calibration sequence;
receiving, by the first network device, a fourth target calibration sequence sent by the second network device through the network interface (1104, 1303), wherein the fourth target calibration sequence corresponds to the third calibration sequence;
receiving, by the first network device, the second target calibration sequence on the second time-frequency resource in the data sub-frame;
determining, by the first network device, a third calibration coefficient based on the third calibration sequence, the fourth target calibration sequence, the second calibration sequence, and the second target calibration sequence; and
calibrating, by the first network device, a third radio signal based on the third calibration coefficient.

3. The method according to any one of claims 1 to 2, wherein the method further comprises:
generating, by the first network device, radio resource control, RRC, signaling, wherein the RRC signaling comprises the location of the first time-frequency resource;
sending, by the first network device, the RRC signaling to a terminal (43); and
sending, by the first network device, indication information to the terminal (43), wherein the indication information indicates the terminal (43) not to demodulate data on the first time-frequency resource.

4. The method according to any one of claims 1 to 2, wherein before the sending, by a first network device, a first calibration sequence to a second network device on a first time-frequency resource in a data sub-frame, the method further comprises:
generating, by the first network device, a third message, wherein the third message comprises the location of the first time-frequency resource; and
sending, by the first network device, the third message to a fifth network device, wherein the third message indicates the fifth network device not to transmit information on the first time-frequency resource, and the cell (341, 342, 343, 344) in which the first network device is located is adjacent to a cell (341, 342, 343, 344) in which the fifth network device is located.

5. The method according to any one of claims 1 to 2, wherein the first time-frequency resource comprises one or two time domain symbols, and the second time-frequency resource and the first time-frequency resource comprise a same quantity of time domain symbols.

6. A network device, comprising units for implementing the method according to any one of claims 1 to 5.

7. The network device according to claim 6, wherein the unit for implementing sending is a pico remote radio unit pRRU (331, 332, 333, 334, 335, 336, 337, 338, 339), an active antenna unit AAU, or a remote radio unit RRU, and the unit for implementing receiving is a pRRU (331, 332, 333, 334, 335, 336, 337, 338, 339), an AAU, or an RRU.

8. A computer-readable storage medium, wherein the computer-readable storage medium stores a computer program, and when the computer program is run on a computer, the computer is enabled to perform the signal processing method according to any one of claims 1 to 5.

## Patentansprüche

1. Signalverarbeitungsverfahren, umfassend:
Senden einer ersten Kalibrierungssequenz durch eine erste Netzwerkvorrichtung an eine zweite Netzwerkvorrichtung auf einer ersten Zeit-Frequenz-Ressource in einem Datenteilrahmen, wobei eine Zelle (341, 342, 343, 344), in welcher sich die erste Netzwerkvorrichtung befindet, benachbart an einer Zelle (341, 342, 343, 344) liegt, in welcher sich die zweite Netzwerkvorrichtung befindet;
Empfangen einer ersten Zielkalibrierungssequenz, die über eine Netzwerkschnittstelle (1104, 1303) durch die zweite Netzwerkvorrichtung gesendet wird, durch die erste Netzwerkvorrichtung, wobei die erste Zielkalibrierungssequenz eine Kalibrierungssequenz ist, die durch die zweite Netzwerkvorrichtung auf der ersten Zeit-Frequenz-Ressource empfangen wird;
Empfangen einer zweiten Zielkalibrierungssequenz auf einer zweiten Zeit-Frequenz-Ressource in einem Datenteilrahmen durch die erste Netzwerkvorrichtung, wobei die zweite Zielkalibrierungssequenz einer zweiten Kalibrierungssequenz entspricht, die durch die zweite Netzwerkvorrichtung auf der zweiten Zeit-Frequenz-Ressource gesendet wird;
Bestimmen eines ersten Kalibrierungskoeffizienten durch die erste Netzwerkvorrichtung basierend auf der ersten Kalibrierungssequenz, der ersten Zielkalibrierungssequenz, der zweiten vorab gespeicherten Kalibrierungssequenz und der zweiten Zielkalibrierungssequenz; und
Kalibrieren eines ersten Funksignals durch die erste Netzwerkvorrichtung basierend auf dem ersten Kalibrierungskoeffizienten, und **dadurch gekennzeichnet, dass** das Verfahren ferner Folgendes umfasst:
Empfangen einer ersten Nachricht, die durch eine dritte Netzwerkvorrichtung gesendet wird, durch die erste Netzwerkvorrichtung, wobei die erste Nachricht die erste Kalibrierungssequenz und eine Position einer dritten Zeit-Frequenz-Ressource umfasst, eine Zelle (341, 342, 343, 344), in welcher sich die dritte Netzwerkvorrichtung befindet, benachbart an der Zelle (341, 342, 343, 344) liegt, in welcher sich die erste Netzwerkvorrichtung befindet, und die dritte Zeit-Frequenz-Ressource durch die dritte Netzwerkvorrichtung verwendet wird, um die erste Kalibrierungssequenz zu senden;
wenn die Position der dritten Zeit-Frequenz-Ressource eine Position der ersten Zeit-Frequenz-Ressource überlappt, Senden der ersten Kalibrierungssequenz durch die erste Netzwerkvorrichtung an die zweite Netzwerkvorrichtung auf einer vierten Zeit-Frequenz-Ressource in einem Datenteilrahmen, wobei die vierte Zeit-Frequenz-Ressource die dritte Zeit-Frequenz-Ressource nicht überlappt;
Empfangen einer dritten Zielkalibrierungssequenz, die über die Netzwerkschnittstelle (1104, 1303) durch die zweite Netzwerkvorrichtung gesendet wird, durch die erste Netzwerkvorrichtung, wobei die dritte Zielkalibrierungssequenz eine Kalibrierungssequenz ist, die durch die zweite Netzwerkvorrichtung auf der vierten Zeit-Frequenz-Ressource empfangen wird;
Empfangen der zweiten Zielkalibrierungssequenz auf der zweiten Zeit-Frequenz-Ressource in dem Datenteilrahmen durch die erste Netzwerkvorrichtung;
Bestimmen eines zweiten Kalibrierungskoeffizienten durch die erste Netzwerkvorrichtung basierend auf der ersten Kalibrierungssequenz, der dritten Zielkalibrierungssequenz, der zweiten Kalibrierungssequenz und der zweiten Zielkalibrierungssequenz; und Kalibrieren eines zweiten Funksignals durch die erste Netzwerkvorrichtung basierend auf dem zweiten Kalibrierungskoeffizienten.

2. Verfahren nach Anspruch 1, wobei das Verfahren ferner Folgendes umfasst:
Empfangen einer zweiten Nachricht, die durch eine vierte Netzwerkvorrichtung gesendet wird, durch die erste Netzwerkvorrichtung, wobei die zweite Nachricht die erste Kalibrierungssequenz und eine Position einer fünften Zeit-Frequenz-Ressource umfasst, eine Zelle (341, 342, 343, 344), in welcher sich die vierte Netzwerkvorrichtung befindet, benachbart an der Zelle (341, 342, 343, 344) liegt, in welcher sich die erste Netzwerkvorrichtung befindet, und die fünfte Zeit-Frequenz-Ressource durch die vierte Netzwerkvorrichtung verwendet wird, um die erste Kalibrierungssequenz zu senden;
wenn die Position der fünften Zeit-Frequenz-Ressource eine Position der ersten Zeit-Frequenz-Ressource überlappt, Senden einer dritten Kalibrierungssequenz durch die erste Netzwerkvorrichtung an die zweite Netzwerkvorrichtung auf der ersten Zeit-Frequenz-Ressource, wobei die erste Kalibrierungssequenz orthogonal zu der dritten Kalibrierungssequenz verläuft;
Empfangen einer vierten Zielkalibrierungssequenz, die über die Netzwerkschnittstelle (1104, 1303) durch die zweite Netzwerkvorrichtung gesendet wird, durch die erste Netzwerkvorrichtung, wobei die vierte Zielkalibrierungssequenz der dritten Kalibrierungssequenz entspricht;
Empfangen der zweiten Zielkalibrierungssequenz auf der zweiten Zeit-Frequenz-Ressource in dem Datenteilrahmen durch die erste Netzwerkvorrichtung;
Bestimmen eines dritten Kalibrierungskoeffizienten durch die erste Netzwerkvorrichtung basierend auf der dritten Kalibrierungssequenz, der vierten Zielkalibrierungssequenz, der zweiten Kalibrierungssequenz und der zweiten Zielkalibrierungssequenz; und
Kalibrieren eines dritten Funksignals durch die erste Netzwerkvorrichtung basierend auf dem dritten Kalibrierungskoeffizienten.

3. Verfahren nach einem der Ansprüche 1 bis 2, wobei das Verfahren ferner Folgendes umfasst:
Erzeugen einer Signalisierung der Funkressourcensteuerung, RRC-Signalisierung, durch die erste Netzwerkvorrichtung, wobei die RRC-Signalisierung die Position der ersten Zeit-Frequenz-Ressource umfasst;
Senden der RRC-Signalisierung durch die erste Netzwerkvorrichtung an ein Endgerät (43); und
Senden von Anzeigeinformationen durch die erste Netzwerkvorrichtung an das Endgerät (43), wobei die Anzeigeinformationen das Endgerät (43) anweisen, Daten auf der ersten Zeit-Frequenz-Ressource nicht zu demodulieren.

4. Verfahren nach einem der Ansprüche 1 oder 2, wobei das Verfahren vor dem Senden einer ersten Kalibrierungssequenz durch eine erste Netzwerkvorrichtung an eine zweite Netzwerkvorrichtung auf einer ersten Zeit-Frequenz-Ressource in einem Datenteilrahmen ferner Folgendes umfasst:
Erzeugen einer dritten Nachricht durch die erste Netzwerkvorrichtung, wobei die dritte Nachricht die Position der ersten Zeit-Frequenz-Ressource umfasst; und
Senden der dritten Nachricht durch die erste Netzwerkvorrichtung an eine fünfte Netzwerkvorrichtung, wobei die dritte Nachricht die fünfte Netzwerkvorrichtung anweist, keine Informationen an die erste Zeit-Frequenz-Ressource zu übertragen, und die Zelle (341, 342, 343, 344), in welcher sich die erste Netzwerkvorrichtung befindet, benachbart an einer Zelle (341, 342, 343, 344) liegt, in welcher sich die fünfte Netzwerkvorrichtung befindet.

5. Verfahren nach einem der Ansprüche 1 bis 2, wobei die erste Zeit-Frequenz-Ressource ein oder zwei Zeitbereichssymbole umfasst, und die zweite Zeit-Frequenz-Ressource und die erste Zeit-Frequenz-Ressource dieselbe Anzahl von Zeitbereichssymbolen umfassen.

6. Netzwerkvorrichtung, umfassend Einheiten zum Implementieren des Verfahrens nach einem der Ansprüche 1 bis 5.

7. Netzwerkvorrichtung nach Anspruch 6, wobei die Einheit zum Implementieren des Sendens eine Pico-Fernfunkeinheit pRRU (331, 332, 333, 334, 335, 336, 337, 338, 339), eine aktive Antenneneinheit AAU oder eine Fernfunkeinheit RRU ist und die Einheit zum Implementieren des Empfangens eine pRRU (331, 332, 333, 334, 335, 336, 337, 338, 339), eine AAU oder eine RRU ist.

8. Computerlesbares Speichermedium, wobei das computerlesbare Speichermedium ein Computerprogramm speichert und, wenn das Computerprogramm auf einem Computer ausgeführt wird, der Computer in die Lage versetzt wird, das Signalverarbeitungsverfahren nach einem der Ansprüche 1 bis 5 durchzuführen.

## Revendications

1. Procédé de traitement de signal, comprenant :
l'envoi, par un premier dispositif de réseau, d'une première séquence d'étalonnage à un deuxième dispositif de réseau sur une première ressource temps-fréquence dans une sous-trame de données, dans lequel une cellule (341, 342, 343, 344) dans laquelle se trouve le premier dispositif de réseau est adjacente à une cellule (341, 342, 343, 344) dans laquelle se trouve le deuxième dispositif de réseau ;
la réception, par le premier dispositif de réseau, d'une première séquence d'étalonnage cible envoyée par le deuxième dispositif de réseau via une interface de réseau (1104, 1303), dans lequel la première séquence d'étalonnage cible est une séquence d'étalonnage reçue par le deuxième dispositif de réseau sur la première ressource temps-fréquence ;
la réception, par le premier dispositif de réseau, d'une deuxième séquence d'étalonnage cible sur une deuxième ressource temps-fréquence dans une sous-trame de données, dans lequel la deuxième séquence d'étalonnage cible correspond à une deuxième séquence d'étalonnage envoyée par le deuxième dispositif de réseau sur la deuxième ressource temps-fréquence ;
la détermination, par le premier dispositif de réseau, d'un premier coefficient d'étalonnage sur la base de la première séquence d'étalonnage, de la première séquence d'étalonnage cible, de la deuxième séquence d'étalonnage pré-stockée et de la deuxième séquence d'étalonnage cible ; et
l'étalonnage, par le premier dispositif de réseau, d'un premier signal radio sur la base du premier coefficient d'étalonnage, et **caractérisé en ce que** le procédé comprend en outre :
la réception, par le premier dispositif de réseau, d'un premier message envoyé par un troisième dispositif de réseau, dans lequel le premier message comprend la première séquence d'étalonnage et un emplacement d'une troisième ressource temps-fréquence, une cellule (341, 342, 343, 344) dans laquelle se trouve le troisième dispositif de réseau est adjacente à la cellule (341, 342, 343, 344) dans laquelle se trouve le premier dispositif de réseau, et la troisième ressource temps-fréquence est utilisée par le troisième dispositif de réseau pour envoyer la première séquence d'étalonnage ;
lorsque l'emplacement de la troisième ressource temps-fréquence chevauche un emplacement de la première ressource temps-fréquence, l'envoi, par le premier dispositif de réseau, de la première séquence d'étalonnage au deuxième dispositif de réseau sur une quatrième ressource temps-fréquence dans une sous-trame de données, dans lequel la quatrième ressource temps-fréquence ne chevauche pas la troisième ressource temps-fréquence ;
la réception, par le premier dispositif de réseau, d'une troisième séquence d'étalonnage cible envoyée par le deuxième dispositif de réseau via l'interface de réseau (1104, 1303), dans lequel la troisième séquence d'étalonnage cible est une séquence d'étalonnage reçue par le deuxième dispositif de réseau sur la quatrième ressource temps-fréquence ;
la réception, par le premier dispositif de réseau, de la deuxième séquence d'étalonnage cible sur la deuxième ressource temps-fréquence dans la sous-trame de données ;
la détermination, par le premier dispositif de réseau, d'un deuxième coefficient d'étalonnage sur la base de la première séquence d'étalonnage, de la troisième séquence d'étalonnage cible, de la deuxième séquence d'étalonnage et de la deuxième séquence d'étalonnage cible ; et
l'étalonnage, par le premier dispositif de réseau, d'un deuxième signal radio sur la base du deuxième coefficient d'étalonnage.

2. Procédé selon la revendication 1, dans lequel le procédé comprend en outre :
la réception, par le premier dispositif de réseau, d'un deuxième message envoyé par un quatrième dispositif de réseau, dans lequel le deuxième message comprend la première séquence d'étalonnage et un emplacement d'une cinquième ressource temps-fréquence, une cellule (341, 342, 343, 344) dans laquelle se trouve le quatrième dispositif de réseau est adjacente à la cellule (341, 342, 343, 344) dans laquelle se trouve le premier dispositif de réseau, et la cinquième ressource temps-fréquence est utilisée par le quatrième dispositif de réseau pour envoyer la première séquence d'étalonnage ;
lorsque l'emplacement de la cinquième ressource temps-fréquence chevauche un emplacement de la première ressource temps-fréquence, l'envoi, par le premier dispositif de réseau, d'une troisième séquence d'étalonnage au deuxième dispositif de réseau sur la première ressource temps-fréquence, dans lequel la première séquence d'étalonnage est orthogonale par rapport à la troisième séquence d'étalonnage ;
la réception, par le premier dispositif de réseau, d'une quatrième séquence d'étalonnage cible envoyée par le deuxième dispositif de réseau via l'interface de réseau (1104, 1303), dans lequel la quatrième séquence d'étalonnage cible correspond à la troisième séquence d'étalonnage ;
la réception, par le premier dispositif de réseau, de la deuxième séquence d'étalonnage cible sur la deuxième ressource temps-fréquence dans la sous-trame de données ;
la détermination, par le premier dispositif de réseau, d'un troisième coefficient d'étalonnage sur la base de la troisième séquence d'étalonnage, de la quatrième séquence d'étalonnage cible, de la deuxième séquence d'étalonnage et de la deuxième séquence d'étalonnage cible ; et
l'étalonnage, par le premier dispositif de réseau, d'un troisième signal radio sur la base du troisième coefficient d'étalonnage.

3. Procédé selon l'une quelconque des revendications 1 et 2, dans lequel le procédé comprend en outre :
la génération, par le premier dispositif de réseau, d'une signalisation de commande de ressources radio, RRC, dans lequel la signalisation RRC comprend l'emplacement de la première ressource temps-fréquence ;
l'envoi, par le premier dispositif de réseau, de la signalisation RRC à un terminal (43) ; et
l'envoi, par le premier dispositif de réseau, d'informations d'indication au terminal (43), dans lequel les informations d'indication indiquent au terminal (43) de ne pas démoduler les données sur la première ressource temps-fréquence.

4. Procédé selon l'une quelconque des revendications 1 et 2, dans lequel avant l'envoi, par un premier dispositif de réseau, d'une première séquence d'étalonnage à un deuxième dispositif de réseau sur une première ressource temps-fréquence dans une sous-trame de données, le procédé comprend en outre :
la génération, par le premier dispositif de réseau, d'un troisième message, dans lequel le troisième message comprend l'emplacement de la première ressource temps-fréquence ; et
l'envoi, par le premier dispositif de réseau, du troisième message à un cinquième dispositif de réseau, dans lequel le troisième message indique au cinquième dispositif de réseau de ne pas transmettre d'informations sur la première ressource temps-fréquence, et la cellule (341, 342, 343, 344) dans laquelle se trouve le premier dispositif de réseau est adjacente à une cellule (341, 342, 343, 344) dans laquelle se trouve le cinquième dispositif de réseau.

5. Procédé selon l'une quelconque des revendications 1 et 2, dans lequel la première ressource temps-fréquence comprend un ou deux symboles de domaine temporel, et la deuxième ressource temps-fréquence et la première ressource temps-fréquence comprennent une même quantité de symboles de domaine temporel.

6. Dispositif de réseau, comprenant des unités destinées à mettre en œuvre le procédé selon l'une quelconque des revendications 1 à 5.

7. Dispositif de réseau selon la revendication 6, dans lequel l'unité destinée à mettre en œuvre l'envoi est une unité radio distante pico pRRU, (331, 332, 333, 334, 335, 336, 337, 338, 339), une unité d'antenne active AAU, ou une unité radio distante RRU, et l'unité destinée à mettre en œuvre la réception est une pRRU (331, 332, 333, 334, 335, 336, 337, 338, 339), une AAU, ou une RRU.

8. Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé de traitement de signal selon l'une quelconque des revendications 1 à 5.
